# EUROPÄISCHE PATENTSCHRIFT

(11) **EP 2 063 152 B1**
(45) Veröffentlichungstag und Bekanntmachung des Hinweises auf die Patenterteilung: **02.02.2011**
(21) Anmeldenummer: 08105379.5
(22) Anmeldetag: 18.09.2008
(51) Int. Cl.: F16H 61/688, F16D 48/08

(54) **Verfahren zum Schalten eines Doppelkupplungsgetriebes**
Method for switching a double coupling drive
Procédé de commutation d'un engrenage d'embrayage double

(30) Priorität: 26.11.2007 DE 102007057205
(43) Veröffentlichungstag der Anmeldung: 27.05.2009
(73) Patentinhaber: Getrag Ford Transmissions GmbH, 50735 Köln (DE)
(72) Erfinder: Schmitz, Harald, 44225 Dortmund (DE); Leibbrandt, Martin, 50181 Bedburg (DE); Siebigteroth, Marco, 53773 Hennef (DE)

(56) Entgegenhaltungen:
- EP-A- 1 855 021
- EP-B- 1 507 103
- WO-A-2007/124710
- DE-T2-602005 000 435

## Beschreibung

Die Erfindung betrifft ein Verfahren zum Schalten eines Doppelkupplungsgetriebes in einem mit einem Motor betriebenen Fahrzeug, mit einer ersten Kupplung und mit einer zweiten Kupplung sowie mit einem ersten Teilgetriebe und einem zweiten Teilgetriebe, wobei dem ersten Teilgetriebe die erste Kupplung und eine erste Gruppe von Gängen und dem zweiten Teilgetriebe die zweite Kupplung und eine zweite Gruppe von Gängen zugeordnet sind.

Bei Doppelkupplungsgetrieben wird das Schalten bzw. der Gangwechsel normalerweise auf eine von zwei Arten vorgenommen: Bei Zughoch- und Schubrückschaltungen wird zuerst im zweiten Teilgetriebe, das vor dem Schalten kein Drehmoment übertragen soll, ein Zielgang eingelegt. Danach wird das anliegende Motormoment gemäß einer vorgegebenen Motorlast von der ersten Kupplung auf die zweite Kupplung übertragen. Dabei wird die zweite passive Kupplung unter Schlupf so geregelt, dass die Motordrehzahl der Drehzahl einer Eingangswelle des ersten Teilgetriebes entspricht. Im Anschluss daran wird die Motordrehzahl durch Reduktion des Motormomentes und Regelung der Drehmomentkapazität der zweiten Kupplung auf die Drehzahl einer Eingangswelle des zweiten Teilgetriebes geregelt. Danach kann die zweite Kupplung vollständig geschlossen werden. Eine derartige Regelung der Drehmomentkapazitäten der ersten und zweiten Kupplung sowie der sich anschließenden Anpassung der Motordrehzahl an die Drehzahl der zweiten Eingangswelle des zweiten Teilgetriebes ist in der EP 1 507 103 B1 offenbart.

Bei Zugrückschaltungen oder Schubhochschaltungen wird die Reihenfolge der Drehmomentübergabe (Abbau der Drehmomentkapazität der ersten Kupplung bei gleichzeitigem Aufbau der Drehmomentkapazität der zweiten Kupplung) und der Anpassung der Motordrehzahl vertauscht: Zuerst wird die erste Kupplung in Schlupf gebracht und die Motordrehzahl auf die Drehzahl der Eingangswelle des zweiten Teilgetriebes angehoben. Davor oder während dessen wird in dem zweiten Teilgetriebe der Zielgang eingelegt. Sobald die Motordrehzahl der Drehzahl der Eingangswelle des zweiten Teilgetriebes entspricht, wird das Drehmoment von der ersten Kupplung (noch aktiven Kupplung) auf die zweite Kupplung (bisher passive Kupplung) übergeben und damit die Schaltung abgeschlossen.

Diese Arten der Schaltung haben zwei Einschränkungen, die sie für die Benutzung während eines Anfahrens des Fahrzeugs unvorteilhaft erscheinen lassen: Zum einen funktionieren sie am besten, wenn sich die Motordrehzahl zwischen den Drehzahlen der beiden Eingangswellen befindet, zum anderen ist diese Schaltung sehr sensitiv gegenüber wechselnden Motordrehmomenten oder -lasten (z.B. aufgrund wechselnder Fahrpedalstellungen).

Die gattungsbildende WO 2007/124710 befasst sich ebenfalls mit einem Verfahren zum Regeln der Drehmomentkapazität von zwei Kupplungen eines Doppelkupplungsgetriebes beim Schalten. Beim Schalten werden die Drehmomentkapazitäten der öffnenden Kupplung und der schließenden Kupplung gemäß Sollkurven verändert. Diese Sollkurven lassen sich auf der Basis eines Vergleichs von Sollwerten und Istwerten, welche bei der Schaltung erfasst werden, für eine nachfolgende Schaltung adaptieren, um ein unerwünschtes Hochlaufen der Drehzahl des Motors oder andere unerwünschte Drehzahländerungen zu vermeiden.

Beim Anfahren befindet sich die Motordrehzahl üblicher Weise oberhalb von den Drehzahlen der beiden Eingangswellen der Teilgetriebe, in denen üblicher Weise einerseits ein erster Vorwärtsgang und andererseits ein zweiter Vorwärtsgang des Fahrzeugs vorgewählt sind. Ebenfalls sollte aus Komfortgründen die Schaltung über einen längeren Zeitraum erfolgen und ist somit besonders anfällig gegenüber wechselnden Gaspedalstellungen, die speziell in Rangiersituationen während des Anfahrens sehr häufig vorkommen. Auch können mit dem oben beschriebenen Verfahren keine Schaltungen abgewickelt werden, bei denen die Drehzahl der Eingangwelle des zweiten Teilgetriebes unterhalb der Motor-Leerlaufdrehzahl liegt. Dadurch werden frühe Hochschaltungen, die bei niedrigen Fahrpedalstellungen aufgrund des normalerweise großen Stufensprungs wünschenswert sind, unmöglich.

Der Erfindung liegt daher die Aufgabe zugrunde, ein neues verbessertes Verfahren zum Schalten des Doppelkupplungsgetriebes während des Anfahrens des Fahrzeugs bereits zu stellen.

Die der Erfindung zugrunde liegende Aufgabe wird mit dem Verfahren gemäß Anspruch 1 gelöst. Bevorzugte Ausführungsbeispiele können den Unteransprüchen entnommen werden.

Das erfindungsgemäße Verfahren zeichnet sich dadurch aus, dass die Anpassung der Motordrehzahl über den Aufbau der Drehmomentkapazität der zweiten Kupplung erfolgt, wobei die Drehmomentkapazität der zweiten Kupplung auf einen Drehmomentendwert geführt wird, bei dem eine vom Zielgang und von der Motordrehzahl abhängige Anfahrkennlinie eine Motorkennlinie einer vorgegebenen Motorlast schneidet. Somit wird beim Schalten eine Fahrstrategie ausgenutzt, die über die Anfahrkennlinie des Zielgangs implementiert ist. Bei dieser Anfahrkennlinie wird das übertragbare Drehmoment oder die Drehmomentkapazität der zweiten Kupplung in Abhängigkeit von der Motordrehzahl (und/oder gegebenenfalls der Fahrzeuggeschwindigkeit) bestimmt. Diese Abhängigkeit wird nun für einen zweiten (Vorwärts)Gang des Doppelkupplungsgetriebes, der dem zweiten Teilgetriebe zugeordnet ist, anders gestaltet als für einen ersten (Vorwärts-)Gang des Doppelkupplungsgetriebes, der dem ersten Teilgetriebe zugeordnet ist, und zwar zweckmäßigerweise in der Gestalt, dass für das gleiche Kupplungsmoment im höheren Gang eine geringere Motordrehzahl notwendig ist. Somit weist die Anfahrkennlinie des zweiten Ganges bei gleicher Motordrehzahl größere Drehmomentwerte als die Anfahrkennlinie des ersten Ganges auf.

Vorzugsweise steigt die vom Zielgang abhängige Anfahrkennlinie (Anfahrkennlinie des Zielganges) mit der Motordrehzahl monoton stetig und weist im Schnittpunkt mit der Motorkennlinie eine Steigung auf, die größer als die Steigung der Motorkennlinie in diesem Schnittpunkt ist. Dadurch wird sichergestellt, dass bei dem Aufbau der Drehmomentkapazität der zweiten Kupplung der Motor sicher die Motordrehzahl erreicht, in dem sich die Anfahrkennlinie des Zielgangs und die Motorkennlinie mit der vorgegebenen Motorlast schneiden. Es sei an dieser Stelle darauf hingewiesen, dass sich während des Schaltens die Motorlast aufgrund einer geänderten Pedalstellung ändern kann. In diesem Fall entspricht die vorgegebene Motorlast der augenblicklichen Motorlast.

Zeitgleich mit dem Aufbau der Drehmomentkapazität der zweiten Kupplung erfolgt der Abbau der Drehmomentkapazität der ersten Kupplung, wobei vorzugsweise die Drehmomentkapazität der ersten Kupplung ausgehend von einem Drehmomentstartwert, bei dem eine vom Startgang und der Motordrehzahl abhängige Anfahrkennlinie die Motorkennlinie der vorgegebenen Motorlast schneidet, auf einen Wert 0 geführt wird. Somit ist auch für den Startgang eine Anfahrkennlinie hinterlegt, die die Drehmomentkapazität der ersten Kupplung für den Startgang in Abhängigkeit der Motordrehzahl festlegt. Nach dem Schalten kann die Drehmomentkapazität der ersten Kupplung auch Werte ungleich 0 annehmen, wobei dann aber nur sehr kleine Drehmomente übertragen werden können. Beispielsweise kann es zwecks Regelung der Kupplung gewünscht sein, dass auch bei passiv gestellter Kupplung noch eine sehr kleine Drehmomentkapazität gestellt ist.

Vorzugsweise steigt die vom Startgang abhängige Anfahrkennlinie (Anfahrkennlinie des Startganges) mit der Motordrehzahl monoton stetig an und weist im Schnittpunkt mit der Motorkennlinie der vorgegebenen Motorlast eine Steigung auf, die größer ist als die Steigung der Motorkennlinie in diesem Schnittpunkt. Durch die stetig ansteigenden Anfahrkennlinien, den definierten Schnittpunkten mit der Motorkennlinie und mit den Verhältnissen der Steigungen in den Schnittpunkten (Anfahrkennlinie weist im Schnittpunkt eine höhere Steigung als die Motorkennlinie auf) erfolgt eine stabile und eindeutige Anpassung der Motordrehzahl, wenn die Drehmomentkapazität der ersten Kupplung abgebaut und die Drehmomentkapazität der zweiten Kupplung aufgebaut wird.

Vorzugsweise ist zum Beginn des Schaltvorgangs die Motordrehzahl größer als die Drehzahl der Eingangswelle des ersten Teilgetriebes.

Wird nun eine Schaltung während des Anfahrens (Motordrehzahl ist größer als die Drehzahl der Eingangswelle des ersten Teilgetriebes) angefordert, wird das Motormoment von der ersten Kupplung auf die zweite Kupplung übergeblendet. Dies bewirkt aufgrund der Anfahrkennlinien automatisch eine Anpassung der Motordrehzahl, so dass bei dieser Schaltung die Drehmomentenübergabe von der ersten Kupplung auf die zweite Kupplung und die Anpassung der Motordrehzahl gleichzeitig geschehen. Da die Anfahrkennlinien robust gegenüber sich ändernden Pedalstellungen sind, ist auch die aus der Drehmomentübergabe resultierende Drehmomentverteilung robust, so dass auch während der Schaltung ein sich änderndes Motordrehmoment akzeptiert werden kann. Ebenfalls kann die Schaltung leicht rückabgewickelt werden, in dem die Drehmomentübergabe zurückgenommen wird.

Die Drehmomentkapazität der zweiten Kupplung kann dem Produkt des Drehmomentendwertes gemäß Anfahrkennlinie und einer Aufbaufunktion F_{Auf} entsprechen, die mit dem Wert 0 beginnt und mit dem Wert 1 endet. Die Drehmomentkapazität der ersten Kupplung kann einem Produkt des Drehmomentstartwertes und einer Abbaufunktion F_{Ab} entsprechen, die mit dem Wert 1 beginnt und mit dem Wert 0 endet. Die Aufbaufunktion F_{Auf} und/oder die Abbaufunktion F_{Ab} können linear von der Motordrehzahl oder der Zeit abhängen. In einem bevorzugten Ausführungsbeispiel gilt dabei: F_{Ab} = 1 - F_{Auf}. Eine weitere Möglichkeit besteht darin, die Drehmomentkapazität der ersten und zweiten Kupplung mit jeweils eigener Funktion oder mit einem eigenen Faktor zu versehen, wobei die beiden Faktoren in geeigneter Weise gegenläufig sind und so ein Überblenden der Kupplungsmomente realisieren. Auf diese Weise können Verzögerungen im Systemverhalten ausgeglichen werden, in dem sie in den Verläufen der Faktoren vorgehalten werden. Die Funktionen F_{Auf}, F_{Ab} können, wie oben bereits beschrieben, linear oder variabel über ein Kennfeld oder eine Kennfunktion abgebildet sein. Sie können von der Zeit, der Fahrzeuggeschwindigkeit, der Motordrehzahl und/oder dem Motor- bzw. Fahrerwunschmoment abhängen. Auch ist eine gegenseitige Beeinflussung der Einflussgrößen möglich (z.B. eine zeitabhängige Charakteristik, bei der die Übergabezeit von dem Fahrerwunschmoment abhängt).

Die Ausgestaltung der beiden Anfahrkennlinien kann von der Drehmomentcharakteristik des Motors und der Abhängigkeit dieser Charakteristik von dem gewählten Gang abhängen. Um nach der Schaltung die gleiche Beschleunigung des Fahrzeugs zu haben, muss das Motormoment im zweiten Gang bei der gewünschten Drehzahl nach der Schaltung um den Faktor des Verhältnisses der Gangübersetzungen höher sein als im ersten Gang bei der Ausgangsdrehzahl. Dies entspricht in der Regel nicht der Charakteristik, die normalerweise für eine Schaltung benötigt wird, bei der sich sowohl die Drehzahl als auch das Drehmoment nach der Schaltung mit dem Verhältnis der Gangübersetzungen ändern.

Bei der Anpassung der Motordrehzahl kann ein Motoreingriff erfolgen, um den Einfluss von Trägheitsmomenten, bedingt durch ein Abbremsen des Motors, auszugleichen. Da die Übergabe jedoch in der Regel länger dauert als bei Schaltungen, wie sie aus dem Stand der Technik bekannt sind, kann der Motoreingriff deutlich niedriger ausfallen.

Vorzugsweise ist der Abbau der Drehmomentkapazität der ersten Kupplung abgeschlossen, bevor die Motordrehzahl die Drehzahl der Eingangswelle des ersten Teilgetriebes unterschreitet, da sonst ein Verspannungszustand erzeugt wird, bei dem die Eingangswelle des ersten Teilgetriebes nicht weiter beschleunigt, sondern abgebremst würde. Dieser Verspannungszustand ist jedoch bei niedrigen Drehmomenten sehr gering, so dass eine deutliche Überlappung zugelassen werden kann. So ist in einem Ausführungsbeispiel bei niedrigen Pedalstellungen und damit bei nierdrigen Drehmomenten zulässig, die Überblendfunktion bis zu 50% durchzuführen, nachdem die Motordrehzahl die Drehzahl der Eingangswelle des ersten Teilgetriebes unterschritten hat, ohne dass eine zu große Komforteinbuße hingenommen werden braucht.

Höhere Überlappungsraten können erzielt werden, indem das Motormoment entsprechend dem Verspannungszustand erhöht wird. Beträgt z.B. der Motormoment 50 Nm, die Drehmomentkapazität der ersten Kupplung noch 30 Nm und die Drehmomentkapazität der zweiten Kupplung 45 Nm (bei einem Gangsprung, also dem Verhältnis der Gangübersetzungen von 1,5), so kann durch eine Erhöhung des Motormomentes und der Drehmomentkapazität der zweiten Kupplung um jeweils 45 Nm ein Verspannungszustand bei Unterschreiten der Drehzahl der Eingangswelle des ersten Teilgetriebes ausgeglichen werden. Da im Laufe der Drehzahlanpassung auch das Drehmoment der ersten Kupplung abgebaut wird, kann auch parallel dazu die Drehmomentüberhöhung des Motors und der zweiten Kupplung zurückgefahren werden. Diese Methode empfiehlt sich hauptsächlich dann, wenn aufgrund von äußeren Umständen (z.B. Einfahrt in eine Steigung) die Schaltung aufgrund sich verändernder Verhältnisse in einen Verspannungsbereich hineinläuft. Durch entsprechenden Motoreingriff kann hier ohne Komforteinbußen die Schaltung zu Ende abgewickelt werden.

Wenn zum Beginn des Schaltvorgangs die Motordrehzahl der Drehzahl der Eingangswelle des ersten Teilgetriebes entspricht, kann die Drehmomentkapazität der zweiten Kupplung bei konstanter bzw. nicht angepasster Motordrehzahl bis auf einen Zwischenwert geführt werden, von dem aus die Drehmomentkapazität der zweiten Kupplung auf den Drehmomentendwert der Anfahrkennlinie geführt wird, wobei die Motordrehzahl in Richtung der Eingangswelle des weiten Teilgetriebes angepasst wird. In diesem Ausführungsbeispiel - analog zur normalen Zughochschaltung - erfolgt zuerst eine Drehmomentübergabe auf die zweite Kupplung, wobei das Drehmoment der zweiten Kupplung zur Regelung der Motordrehzahl dient. Dadurch wird bei gleich bleibenden Drehzahlverhältnissen das Drehmoment auf die zweite Kupplung übertragen. Im Anschluss daran erfolgt der Aufbau der Drehmomentkapazität gemäß Anfahrkennlinie der zweiten Kupplung. Dabei darf der Zwischenwert der Drehmomentkapazität der zweiten Kupplung, der mit der Abbaufunktion F_{Ab} abgebaut wird, jedoch nicht mehr durch die Motordrehzahl geregelt werden, sondern muss konstant gehalten werden bzw. darf nur durch das geschätzte Motormoment beeinflusst werden. Dadurch wird eine Drehzahl- und Drehmomentanpassung an die Anfahrkennlinie der zweiten Kupplung durchgeführt.

Zusammenfassend stellt somit die vorliegende Erfindung ein Verfahren zum Schalten eines Doppelkupplungsgetriebes bereit, wobei die Drehmomentübergabe von der ersten Kupplung auf die zweite Kupplung gleichzeitig mit der Anpassung der Motordrehzahl erfolgt, indem von der Anfahrkennlinie des Startganges auf die Anfahrkennlinie des Zielganges durch entsprechende Funktionen (abbauende Funktion F_{Ab}, aufbauende F_{Auf}) übergeblendet wird. Beim Schalten liegt dabei während des größten Teils der Zeit die Motordrehzahl über den Drehzahlen der beiden Eingangswellen des Doppelkupplungsgetriebes.

Bei einer Schaltung von einer nicht schlupfenden oder tragenden ersten Kupplung zu einer schlupfenden zweiten Kupplung kann erfindungsgemäß zuerst eine Drehmomentübergabe ohne Anpassung der Motordrehzahl stattfinden, wobei während der anschließenden Anpassung der Motordrehzahl ebenfalls die Drehmomentkapazität der zweiten Kupplung auf den Drehmomentendwert gemäß Anfahrkennlinie geführt wird.

Anhand der in der Zeichnung dargestellten Ausführungsbeispiele wird die Erfindung näher erläutert. Es zeigen:
- Figur 1: den schematischen Aufbau eines Doppelkupplungsgetriebes;
- Figur 2: Anfahrkennlinien eines ersten Ganges und eines zweiten Gan- ges sowie eine Motorkennlinie;
- Figur 3: diverse Drehzahlverläufe während eines Schaltvorgangs gemäß einem ersten Ausführungsbeispiel;
- Figur 4: ein Ablaufdiagramm gemäß erstem Ausführungsbeispiel;
- Figur 5: diverse Drehzahlverläufe während eines Schaltvorgangs gemäß einem zweiten Ausführungsbeispiel; und
- Figur 6: ein Ablaufdiagramm gemäß dem zweiten Ausführungsbeispiel.

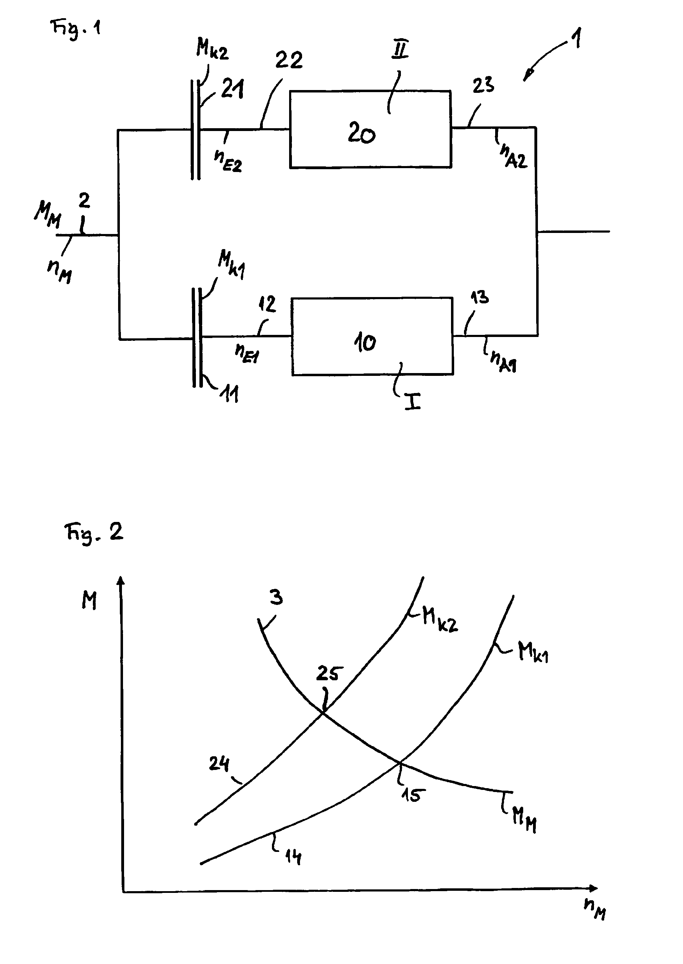

Figur 1 zeigt einen schematischen Aufbau eines Doppelkupplungsgetriebes, das in seiner Gesamtheit mit 1 bezeichnet wird. Das Doppelkupplungsgetriebe 1 weist ein erstes Teilgetriebe 10 und ein zweites Teilgetriebe 20 auf. Dem ersten Teilgetriebe 10 ist eine erste Kupplung 11 zugeordnet, während dem zweiten Teilgetriebe 20 eine zweite Kupplung 21 zugeordnet ist. Mit der ersten Kupplung 11 lässt sich eine Drehung einer Kurbelwelle 2 eines hier nicht dargestellten Motors auf eine Eingangswelle 12 des ersten Teilgetriebes 10 übertragen. Bei einer vollständig geschlossenen Kupplung 11 entspricht eine Motordrehzahl n_{M} des Motors bzw. der Kurbelwelle 2 einer Drehzahl n_{E1} der Eingangswelle 12. Analog lassen sich mit der zweiten Kupplung 21 die Kurbelwelle 2 und eine Eingangswelle 22 des zweiten Teilgetriebes 20 miteinander koppeln, so dass die Motordrehzahl n_{M} der Drehzahl n_{E2} der Eingangswelle 22 entspricht.

Dem ersten Teilgetriebe 10 ist eine erste Gruppe von Gängen zugeordnet, unter denen sich auch ein erster (Vorwärts-) Gang I des Doppelgetriebes 1 befinden soll. Üblicher Weise sind dem ersten Teilgetriebe 10 weitere ungerade Vorwärtsgänge zugeordnet, auf die aber hier nicht weiter eingegangen wird. Dem zweiten Teilgetriebe 20 ist eine zweite Gruppe von Gängen zugeordnet, die einen zweiten (Vorwärts-) Gang II umfassen soll. Auf weitere Vorwärtsgänge des zweiten Teilgetriebes 20 wird hier nicht näher eingegangen.

Eine Ausgangswelle 13 des ersten Teilgetriebes 10 dreht sich mit einer Drehzahl n_{A1}, wobei das Verhältnis der Drehzahlen n_{A1} zu n_{E1} von dem im ersten Teilgetriebe 10 eingelegten Gang abhängig ist. Analog zum ersten Teilgetriebe 10 weist auch das zweite Teilgetriebe 20 eine Ausgangswelle 23 auf, die sich mit einer Drehzahl n_{A2} dreht. Die Drehzahl n_{A2} lässt sich aus der n_{E2} der Eingangswelle 22 und dem Übersetzungsverhältnis des in den zweiten Teilgetriebe 20 eingelegten Ganges bestimmen. Die Ausgangswellen 13, 23 sind über eine gemeinsame Abtriebseinheit (nicht dargestellt) miteinander gekoppelt, sodass die Drehzahlen n_{A1} und n_{A2} gleich groß sind oder zumindest in einem festen Verhältnis zueinander stehen.

Die Drehmomentkapazität oder das maximal übertragbare Kupplungsmoment M_{K2} der ersten Kupplung 11 kann über eine Anfahrkennlinie 14, so wie sie in Figur 2 dargestellt ist, in Abhängigkeit der Motordrehzahl n_{M} eingestellt werden. Die Anfahrkennlinie 14 der Figur 2 steigt monoton stetig mit steigender Motordrehzahl n_{M} an. Soweit ein an der Kurbelwelle 2 anliegendes Motormoment M_{M} größer ist als die Drehmomentkapazität oder das übertragbare Kupplungsmoment M_{K1}, überträgt die erste Kupplung 11 genau dieses Kupplungsmoment M_{K1} auf die Eingangswelle 12 des Teilgetriebes 10.

Figur 2 zeigt des Weiteren eine Anfahrkennlinie 24, die in Abhängigkeit der Motordrehzahl n_{M} das maximal übertragbare Kupplungsmoment M_{K2} der zweiten Kupplung 21 zeigt. Wie aus der Figur 2 ersichtlich, lassen sich mit der zweiten Kupplung 21 bei einer gleichen Motordrehzahl größere Drehmomente übertragen als mit der ersten Kupplung 11. Die Anfahrkennlinien 14, 24 hängen vom eingelegten Gang I, II des jeweiligen Teilgetriebes 10, 20 ab. Ist beispielsweise im ersten Teilgetriebe 10 ein anderer als der erste Vorwärtsgang I eingelegt, so kann eine vollständig andere Abhängigkeit des Kupplungsmomentes M_{K1} der ersten Kupplung 11 hinterlegt sein.

Neben den Anfahrkennlinien 14, 24 zeigt Figur 2 auch eine Motorkennlinie M_{M} einer bestimmten Motorlast (beispielsweise 40 % der Volllast) bzw. eines bestimmten Motormomentes M_{M}. Die Motorkennlinie 3 schneidet die Anfahrkennlinien 14, 24 in Schnittpunkten 15, 25. Im Schnittpunkt 15 ist die Steigung der Anfahrkennlinie 14 größer als die Steigung der Motorkennlinie 3. Entsprechendes gilt für den Schnittpunkt 25.

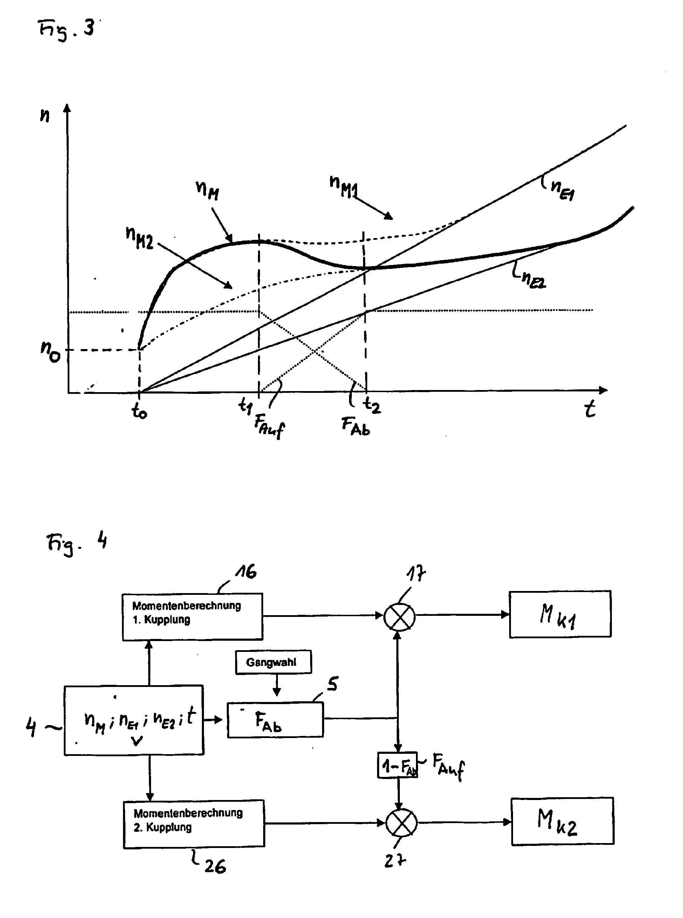

Figur 3 zeigt diverse Drehzahlverläufe über der Zeit t für einen erfindungsgemäßen Schaltvorgang vom ersten Gang I zum zweiten Gang II. Zu einem Zeitpunkt t₀ steht das Fahrzeug still und der Motor dreht mit der Leerlaufdrehzahl n₀. Bei eingelegtem ersten Gang I wird eine bestimmte Motorlast eingestellt, so dass die Motordrehzahl n_{M} (dicke durchgezogene Linie) ausgehend vom Zeitpunkt t₀ ansteigt. Gemäß der Anfahrkennlinie 14 (vgl. Figur 2) steigt mit der Motordrehzahl n_{M} das übertragbare Kupplungsmoment M_{K1} der ersten Kupplung 11, wodurch das Fahrzeug beschleunigt wird und die Drehzahl n_{E1} der Eingangswelle 12 ansteigt. Mit größer werdender Motordrehzahl n_{M} wird auch das übertragbare Kupplungsmoment Mₖ₁ größer, so dass das Fahrzeug weiter beschleunigt wird. Die Motordrehzahl n_{M} verläuft dabei entlang einer Kennlinie n_{M1} (gestrichelte Linie), die sich mit fortschreitender Zeit der Drehzahl n_{E1} angleicht. Die Kennlinie n_{M1} zeigt somit den Verlauf der Motordrehzahl n_{M} an, wenn beim Anfahren des Fahrzeugs nicht geschaltet wird und das Fahrzeug mit dem ersten Gang solang beschleunigt wird, bis die Motordrehzahl n_{M} der Drehzahl n_{E1} der ersten Eingangswelle 12 entspricht und die Kupplung 11 schlupffrei arbeitet.

Im vorliegenden Fall jedoch wird beim Anfahren vom ersten Gang I in den zweiten Gang II geschaltet. Dazu wird in einem Zeitpunkt t₁ das Kupplungsmoment der ersten Kupplung 11 mittels einer Abbaufunktion F_{Ab} reduziert, während gleichzeitig das Kupplungsmoment Mₖ₂ der zweiten Kupplung 21 über eine Aufbaufunktion F_{Auf} aufgebaut wird. Die Aufbaufunktion F_{Auf} und die Abbaufunktion F_{Ab} sind dabei Funktionen, die sich linear zur Zeit t verhalten, wobei deren Steigungen so bemessen sind, dass sie in einem weiteren Zeitpunkt t₂ den Wert 0 (gilt für die Abbaufunktion F_{Ab}) bzw. den Wert 1 (gilt für die Aufbaufunktion F_{Auf}) annehmen. Durch die Funktionen F_{Auf}, F_{Ab} wird das Kupplungsmoment Mₖ₁ der ersten Kupplung 11 von einem Drehmomentstartwert, der zum Zeitpunkt t₁ an der ersten Kupplung 11 anliegt, auf den Wert 0 reduziert. Durch die Aufbaufunktion F_{Auf} wird das Kupplungsmoment Mₖ₂ der zweiten Kupplung 21 ausgehend vom Wert 0 im Zeitpunkt t₁ auf einen Wert Mₖ₂ aufgebaut, der einem Drehmomentendwert entspricht, bei dem die vom zweiten Gang und von der Motordrehzahl abhängige Anfahrkennlinie 24 die Motorkennlinie 3 der vorgegebenen Motorlast schneidet. Entsprechend läuft die Motordrehzahl n_{M} im Zeitpunkt t₂ in die Kennlinie n_{M2}, die die Motordrehzahl darstellt, wenn nur mit dem zweiten Gang angefahren werden würde. Im Zeitpunkt t₂ schneidet zudem die Motordrehzahl n_{M} die Drehzahl n_{E1} der ersten Eingangswelle 12. Dies bedeutet, dass der Motor langsamer dreht als die erste Eingangswelle 12. Würde nach dem Zeitpunkt t₂ weiterhin die erste Kupplung 11 ein Drehmoment übertragen, bremst der Motor die erste Eingangswelle 12 ab, während er über die zweite Kupplung 21 die zweite Eingangswelle 22 antreibt. Dies würde zu einer Verspannung des Doppelkupplungsgetriebes 1 führen, die aber in gewissen Grenzen ohne Komforteinbußen einhergeht. Kommt es zu größeren Verspannungen, so kann diese durch eine Erhöhung des Motormomentes M_{M} ausgeglichen werden.

Figur 4 zeigt ein Ablaufdiagramm zum Berechnen der Drehmomentkapazitäten oder Kupplungsmomente Mₖ₁ und Mₖ₂ der Kupplungen 11, 21. In dem Block 16 wird das Kupplungsmoment der ersten Kupplung gemäß der Anfahrkennlinie 14 (vgl. Figur 2) bestimmt. Das Kupplungsmoment hängt dabei von der Motordrehzahl n_{M} ab, kann aber auch noch von weiteren Faktoren wie die Drehzahl n_{E1} der Eingangswelle 12, der Drehzahl n_{E2} der zweiten Eingangswelle 22, der Zeit t und der Geschwindigkeit v des Fahrzeugs abhängen. In analoger Weise erfolgt die Momentenberechnung gemäß Anfahrkennlinie 24 (vgl. Figur 2) für die zweite Kupplung 21 (siehe Block 26 in Figur 4). Im Block 5 wird die Abbaufunktion F_{Ab} bestimmt, die linear mit der Zeit t von einem Startwert 1 Zeitpunkt t₁ auf einen Endwert 0 im Zeitpunkt t₂ geführt wird. Das Kupplungsmoment der ersten Kupplung 12 gemäß der Anfahrkennlinie 14 und die Abbaufunktion F_{Ab} werden in der Verknüpfung 17 miteinander multipliziert, wobei das durch diese Verknüpfung 17 entstehende Produkt dem Kupplungsmoment Mₖ₁ der ersten Kupplung 12 während des Schaltens entspricht. Das Kupplungsmoment Mₖ₂ der zweiten Kupplung 22 wird durch Multiplikation des Drehmoments gemäß Anfahrkennlinie 24 und der Aufbaufunktion F_{Auf} in einer Verknüpfung 27 berechnet. Die Aufbaufunktion F_{Auf} entspricht dabei der Differenz 1 - F_{Ab}.

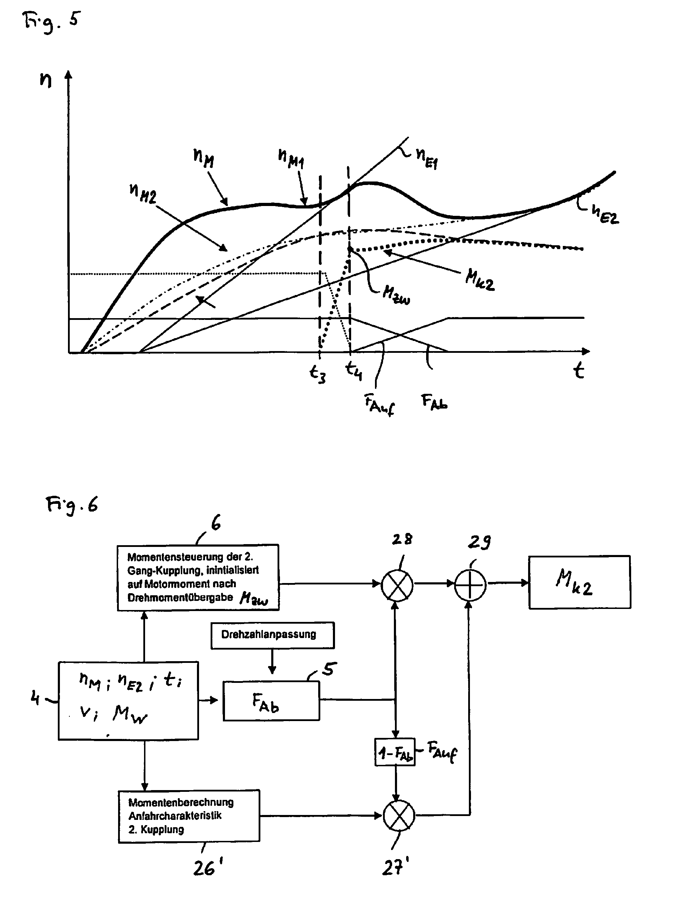

Figur 5 zeigt verschiedene Drehzahlverläufe eines weiteren Ausführungsbeispiels der Erfindung. Ein wesentlicher Unterschied zum Ausführungsbeispiel gemäß Figur 3 besteht darin, dass eine Anpassung der Motordrehzahl n_{M} an die Drehzahl n_{E2} der zweiten Eingangswelle 22 erst nach einem Zeitpunkt t₄ erfolgt. Zuvor wird in einem Zeitraum zwischen einem Zeitpunkt t₃ und dem Zeitpunkt t₄ das Drehmoment von der ersten Kupplung 12 auf die zweite Kupplung 22 übergeblendet, wobei jedoch die erste Kupplung 12 nicht schlupft und lediglich die zweite Kupplung 22 unter Schlupf betrieben wird. Somit wird die zweite Kupplung 21 auf einen Zwischenwert M_{zw} geführt, wobei die Motordrehzahl n_{M} weiterhin der Drehzahl der ersten Eingangswelle 12 entspricht. Ausgehend von dem Zwischenwert M_{zw} erfolgt eine Erhöhung des Kupplungsmomentes Mₖ₂ der zweiten Kupplung 22. Dies erfolgt, was dem Ablaufdiagramm der Figur 6 ebenfalls entnommen werden kann, wiederum über die Abbaufunktion F_{Ab} und über die Aufbaufunktion F_{Auf.} Die Funktionen F_{Ab}, F_{Auf} sind hier ebenfalls von der Zeit t linear abhängig.

Das durch das Ablaufdiagramm der Figur 6 berechnete Kupplungsmoment Mₖ₂ der zweiten Kupplung 21, das zur Anpassung der Motordrehzahl n_{M} an die Drehzahl n_{E2} der zweiten Eingangswelle 22 dient, stellt sich als Summe zweier Summanden dar: Der erste Summand entspricht dabei dem Kupplungsmoment gemäß Anfahrkennlinie 24 (siehe Block 26') zusammen, wobei dieses Drehmoment mit der Aufbaufunktion F_{Auf} in einer Verknüpfung 27' multipliziert wird. Der zweite Summand entspricht einem Produkt aus dem Zwischenwert M_{zw} des Drehmomentes der zweiten Kupplung 22 nach erfolgter Drehmomentüberblendung und der von der Zeit t abhängigen Abbaufunktion F_{Ab}. Der Zwischenwert M_{ZW} und das Kupplungsmoment gemäß Anfahrkennlinie 24 können von der Motordrehzahl n_{M}, von der Drehzahlen n_{E1}, n_{E2} der Eingangswellen 12, 22, der Geschwindigkeit v des Fahrzeugs, der Zeit t und/oder dem Fahrerwunschmoment M_{W} abhängen. Die Multiplikation des Zwischenwertes M_{zw} und der Abbaufunktion F_{Ab} erfolgt im Ablaufdiagramm der Figur 6 in einer Verknüpfung 28. In einer Verknüpfung 29 werden die oben beschriebenen Summanden addiert, wobei die Summe dem Kupplungsmoment Mₖ₂ der zweiten Kupplung 22 entspricht.

Wie der Figur 5 zu entnehmen ist, wird die Motordrehzahl n_{M} ausgehend vom Zeitpunkt t₄ von der Drehzahl n_{E1} der ersten Eingangswelle auf die Drehzahl n_{E2} der zweiten Eingangswelle 22 angepasst.

### Bezugszeichenliste

- 1: Doppelkupplungsgetriebe
- 2: Kurbelwelle
- 3: Motorkennlinie
- 4: Block
- 5: Block
- 6: Block
- 10: erstes Teilgetriebe
- 11: erste Kupplung
- 12: Eingangswelle
- 13: Ausgangswelle
- 14: Anfahrkennlinie
- 15: Schnittpunkt
- 16: Block
- 17: Verknüpfung
- 20: zweites Teilgetriebe
- 21: zweite Kupplung
- 22: Eingangswelle
- 23: Ausgangswelle
- 24: Anfahrkennlinie
- 25: Schnittpunkt
- 26: Block
- 27: Block
- 28: Verknüpfung
- 29: Verknüpfung

## Patentansprüche

1. Verfahren zum Schalten eines Doppelkupplungsgetriebes (1) in einem mit einem Motor betriebenen Fahrzeug, mit einer ersten Kupplung (11) und mit einer zweiten Kupplung (22) sowie mit einem ersten Teilgetriebe (10) und einem zweiten Teilgetriebe (20), wobei dem ersten Teilgetriebe (10) die erste Kupplung (11) und eine erste Gruppe von Gängen und dem zweiten Teilgetriebe (20) die zweite Kupplung (21) und eine zweite Gruppe von Gängen zugeordnet sind, umfassend folgende Verfahrensschritte, um das Doppelkupplungsgetriebe (1) bei einer vorgegebenen Motorlast von einem Startgang, der der ersten Gruppe von Gängen angehört, in einen Zielgang zu schalten, der der zweiten Gruppe von Gängen angehört:
a) Abbau einer Drehmomentkapazität (M_{K1}) der ersten Kupplung (11)
b) Aufbau einer Drehmomentkapazität (M_{K2}) der zweiten Kupplung (21)
c) Anpassung einer Motordrehzahl (n_{M}) des Motors in Richtung einer Drehzahl (n_{E2}) einer Eingangswelle (22) des zweiten Teilgetriebes (20),
wobei die Anpassung der Motordrehzahl (n_{M}) über den Aufbau der Drehmomentkapazität (M_{K2}) der zweiten Kupplung (21) erfolgt, **dadurch gekennzeichnet, dass** die Drehmomentkapazität (M_{K2}) der zweiten Kupplung (21) auf einen Drehmomentendwert geführt wird, bei dem eine vom Zielgang abhängige Anfahrkennlinie (24) eine Motorkennlinie (3) der vorgegebenen Motorlast schneidet, wobei die Anfahrkennlinie (24) eine von der Motordrehzahl (n_{M}) abhängige Drehmomentkapazität (M_{K2}) der zweiten Kupplung (21) beim Anfahren des Fahrzeugs mit dem Zielgang vorgibt.

2. Verfahren nach Anspruch 1, **dadurch gekennzeichnet, dass** der Startgang ein 1. Gang (I) und der Zielgang ein 2. Gang (II) des Doppelkupplungsgetriebes (1) ist, wobei eine vom 2. Gang (II) abgängige Anfahrkennlinie (24) bei gleicher Motordrehzahl (n_{M}) größere Drehmomentwerte aufweist.

3. Verfahren nach Anspruch 1 oder 2, **dadurch gekennzeichnet, dass** die vom Zielgang abhängige Anfahrkennlinie (24) mit der Motordrehzahl (n_{M}) monoton stetig steigt und im Schnittpunkt (25) mit der Motorkennlinie (3) eine größere Steigung als die Motorkennlinie (3) aufweist.

4. Verfahren nach einem der Ansprüche 1 bis 3, **dadurch gekennzeichnet, dass** mit dem Aufbau der Drehmomentkapazität (M_{K2}) der zweiten Kupplung (21) zeitgleich der Abbau der Drehmomentkapazität (M_{K1}) der ersten Kupplung (11) erfolgt, wobei die Drehmomentkapazität (M_{K1}) der ersten Kupplung (11) ausgehend von einem Drehmomentstartwert, bei dem die vom Startgang und der Motordrehzahl abhängige Anfahrkennlinie (14) die Motorkennlinie (3) der vorgegebenen Motorlast schneidet, auf einen Wert 0 geführt wird.

5. Verfahren nach Anspruch 4, **dadurch gekennzeichnet, dass** die vom Startgang abhängige Anfahrkennlinie (14) mit der Motordrehzahl (n_{M}) monoton steigt und im Schnittpunkt (15) mit der Motorkennlinie (3) eine größere Steigung als die Motorkennlinie aufweist.

6. Verfahren nach einem der Ansprüche 1 bis 5, **dadurch gekennzeichnet, dass** zum Beginn des Schaltvorgangs die Motordrehzahl (n_{M}) größer als die Drehzahl (n_{E1}) einer Eingangswelle (12) des ersten Teilgetriebes (10) ist.

7. Verfahren nach einem der Ansprüche 1 bis 6, **dadurch gekennzeichnet, dass** die Anpassung der Motordrehzahl (n_{M}) mit dem Aufbau der Drehmomentkapazität (M_{K2}) der zweiten Kupplung (21) beginnt.

8. Verfahren nach einem der Ansprüche 1 bis 7, **dadurch gekennzeichnet, dass** die Drehmomentkapazität (M_{K2}) der zweiten Kupplung (21) dem Produkt des Drehmomentendwertes und einer Aufbaufunktion (F_{Auf}) entspricht, die mit dem Wert 0 beginnt und mit dem Wert 1 endet.

9. Verfahren nach einem der Ansprüche 4 bis 8, **dadurch gekennzeichnet, dass** die Drehmomentkapazität (M_{K1}) der ersten Kupplung (11) dem Produkt des Drehmomentstartwertes und einer Abbaufunktion (F_{Ab}) entspricht, die mit dem Wert 1 beginnt und mit dem Wert 0 endet.

10. Verfahren nach Anspruch 8 oder 9, **dadurch gekennzeichnet, dass** die Aufbaufunktion (F_{Auf}) und/oder die Abbaufunktion (F_{Ab}) linear von der Motordrehzahl (n_{M}) oder der Zeit (t) abhängen.

11. Verfahren nach einem der Ansprüche 1 bis 10, **dadurch gekennzeichnet, dass** bei Anpassung der Motordrehzahl (n_{M}) ein Motoreingriff zum Ausgleich des Einfluss von Trägheitsmomenten erfolgt

12. Verfahren nach einem der Ansprüche 1 bis 3, 5, 7 bis 11, **dadurch gekennzeichnet, dass** zum Beginn des Schaltvorgangs die Motordrehzahl (n_{M}) der Drehzahl (n_{E1}) der Eingangswelle (12) des ersten Teilgetriebes (10) entspricht und die Drehmomentkapazität (M_{K2}) der zweiten Kupplung (21) bei nicht angepasster Motordrehzahl (n_{M}) bis auf einem Zwischenwert (M_{ZW}) geführt wird, vom dem aus die Drehmomentkapazität (M_{K2}) der zweiten Kupplung (21) auf den Drehmomentendwert der Anfahrkennlinie (24) geführt wird und die Motordrehzahl (n_{M}) auf die Drehzahl (n_{E2}) der Eingangswelle (22) des zweiten Teilgetriebes (20) geführt wird.

## Claims

1. Method for shifting a double-clutch gearbox (1) in a motorized vehicle, having a first clutch (11) and having a second clutch (22), as well as having a first component gearbox (10) and a second component gearbox (20), wherein the first clutch (11) and a first group of gearspeeds are assigned to the first component gearbox (10), and the second clutch (21) and a second group of gearspeeds are assigned to the second component gearbox (20), comprising the following method steps for shifting the double-clutch gearbox (1) from a starting gearspeed, which is associated with the first group of gearspeeds, to a target gearspeed, which is associated with the second group of gearspeeds, at a predefined engine load:
a) reduction in a torque capacity (M_{K1}) of the first clutch (11),
b) increasing of a torque capacity (M_{K2}) of the second clutch (21),
c) adaptation of an engine speed (n_{M}) of the engine in the direction of a rotational speed (n_{E2}) of an input shaft (22) of the second component gearbox (20),
wherein the adaptation of the engine speed (n_{M}) takes place by means of the increasing of the torque capacity (M_{K2}) of the second clutch (21), **characterized in that** the torque capacity (M_{K2}) of the second clutch (21) is adjusted to a torque final value at which a starting characteristic curve (24) which is dependent on the target gearspeed intersects an engine characteristic curve (3) of the predefined engine load, wherein the starting characteristic curve (24) predefines a torque capacity (M_{K2}), dependent on the engine speed (n_{M}), of the second clutch (21) when the vehicle starts with the target gearspeed.

2. Method according to Claim 1, **characterized in that** the starting gearspeed is a 1^{st} gearspeed (I) and the target gearspeed is a 2^{nd} gearspeed (II) of the double-clutch gearbox (1), wherein a starting characteristic curve (24) which is dependent on the 2^{nd} gearspeed (II) has larger torque values for the same engine speed (n_{M}).

3. Method according to Claim 1 or 2, **characterized in that** the starting characteristic curve (24) which is dependent on the target gearspeed rises in a monotonously continuous fashion with the engine speed (n_{M}) and has a larger gradient at the intersection point (25) with the engine characteristic curve (3) than the engine characteristic curve (3).

4. Method according to one of Claims 1 to 3, **characterized in that** the reduction in the torque capacity (M_{K1}) of the first clutch (11) takes place when the torque capacity (M_{K2}) of the second clutch (21) is increased, wherein the torque capacity (M_{K1}) of the first clutch (11) is adjusted to a value zero starting from a torque starting value at which the starting characteristic curve (14) which is dependent on the starting gearspeed and the engine speed intersects the engine characteristic curve (3) of the predefined engine load.

5. Method according to Claim 4, **characterized in that** the starting characteristic curve (14) which is dependent on the starting gearspeed rises monotonously with the engine speed (n_{M}) and has a larger gradient at the intersection point (15) with the engine characteristic curve (3) than the engine characteristic curve.

6. Method according to one of Claims 1 to 5, **characterized in that** at the start of the shifting process the engine speed (n_{M}) is higher than the rotational speed (n_{E1}) of an input shaft (12) of the first component gearbox (10).

7. Method according to one of Claims 1 to 6, **characterized in that** the adaptation of the engine speed (n_{M}) starts with the increasing of the torque capacity (M_{K2}) of the second clutch (21).

8. Method according to one of Claims 1 to 7, **characterized in that** the torque capacity (M_{K2}) of the second clutch (21) corresponds to the product of the torque final value and of an increasing function (F_{Auf}) which starts with the value 0 and ends with the value 1.

9. Method according to one of Claims 4 to 8, **characterized in that** the torque capacity (M_{K1}) of the first clutch (11) corresponds to the product of the torque starting value and of a reduction function (F_{ab}) which starts with the value 1 and ends with the value 0.

10. Method according to Claim 8 or 9, **characterized in that** the increasing function (F_{Auf}) and/or the reduction function (F_{Ab}) depends linearly on the engine speed (n_{M}) or the time (t).

11. Method according to one of Claims 1 to 10, **characterized in that** when the engine speed (n_{M}) is adapted, an engine intervention takes place in order to compensate for the influence of moments of inertia.

12. Method according to one of Claims 1 to 3, 5, 7 to 11, **characterized in that**, at the start of the shifting process, the engine speed (n_{M}) corresponds to the rotational speed (n_{E1}) of the input shaft (12) of the first component gearbox (10), and the torque capacity (M_{K2}) of the second clutch (21) is adjusted, when the engine speed (n_{M}) is not adapted, to an intermediate value (M_{Zw}) from which the torque capacity (M_{K2}) of the second clutch (21) is adjusted to the torque final value of the starting characteristic curve (24), and the engine speed (n_{M}) is adjusted to the rotational speed (n_{E2}) of the input shaft (22) of the second component gearbox (20).

## Revendications

1. Procédé de commutation d'une transmission à double embrayage (1) dans un véhicule entraîné par un moteur, comprenant un premier embrayage (11) et un deuxième embrayage (22) ainsi qu'une première transmission partielle (10) et une deuxième transmission partielle (20), le premier embrayage (11) et un premier groupe de rapports étant associés à la première transmission partielle (10) et le deuxième embrayage (21) et un deuxième groupe de rapports étant associés à la deuxième transmission partielle (20), comprenant les étapes de procédé suivantes, afin de commuter la transmission à double embrayage (1) se trouvant sous une charge moteur prédéfinie, d'un rapport de départ, qui appartient au premier groupe de rapports, dans un rapport cible qui appartient au deuxième groupe de rapports :
a) réduction d'une capacité de couple (M_{K1}) du premier embrayage (11),
b) augmentation d'une capacité de couple (M_{K2}) du deuxième embrayage (21),
c) adaptation d'un régime moteur (n_{M}) du moteur dans le sens d'un régime (n_{E2}) d'un arbre d'entrée (22) de la deuxième transmission partielle (20),
l'adaptation du régime moteur (n_{M}) s'effectuant par le biais de l'augmentation de la capacité de couple (M_{K2}) du deuxième embrayage (21), **caractérisé en ce que** la capacité de couple (M_{K2}) du deuxième embrayage (21) est conduite vers une valeur finale de couple à laquelle une courbe caractéristique de démarrage (24) dépendant d'un rapport cible coupe une courbe caractéristique du moteur (3) de la charge du moteur prédéfinie, la courbe caractéristique de démarrage (24) prédéfinissant une capacité de couple (M_{K2}) du deuxième embrayage (21) dépendant du régime moteur (n_{M}) lors du démarrage du véhicule avec le rapport cible.

2. Procédé selon la revendication 1, **caractérisé en ce que** le rapport de départ est un 1er rapport (I) et le rapport cible est un 2e rapport (II) de la transmission à double embrayage (1), une courbe caractéristique de démarrage (24) dépendant du 2e rapport (II) présentant des valeurs de couple plus grandes pour un même régime moteur (n_{M}).

3. Procédé selon la revendication 1 ou 2, **caractérisé en ce que** la courbe caractéristique de démarrage (24) dépendant du rapport cible augmente de manière continue monotone avec le régime moteur (n_{M}) et présente au point d'intersection (25) avec la courbe caractéristique du moteur (3) une plus grande pente que la courbe caractéristique du moteur (3).

4. Procédé selon l'une quelconque des revendications 1 à 3, **caractérisé en ce que** l'augmentation de la capacité de couple (MK2) du deuxième embrayage (21) a lieu conjointement avec la réduction de la capacité de couple (MK1) du premier embrayage (11), la capacité de couple (MK1) du premier embrayage (11), partant d'une valeur de couple de départ à laquelle la courbe caractéristique de démarrage (14) dépendant du rapport de départ et du régime moteur coupe la courbe caractéristique du moteur (3) de la charge du moteur prédéfinie, étant conduite vers une valeur nulle.

5. Procédé selon la revendication 4, **caractérisé en ce que** la courbe caractéristique de départ (14) dépendant du rapport de départ augmente de manière monotone avec le régime moteur (n_{M}), et présente, au point d'intersection (15) avec la courbe caractéristique du moteur (3), une plus grande pente que la courbe caractéristique du moteur.

6. Procédé selon l'une quelconque des revendications 1 à 5, **caractérisé en ce que** le régime moteur (n_{M}) au début de l'opération de commutation est supérieur au régime (n_{E1}) d'un arbre d'entrée (12) de la première transmission partielle (10).

7. Procédé selon l'une quelconque des revendications 1 à 6, **caractérisé en ce que** l'adaptation du régime moteur (n_{M}) commence avec l'augmentation de la capacité de couple (M_{K2}) du deuxième embrayage (21).

8. Procédé selon l'une quelconque des revendications 1 à 7, **caractérisé en ce que** la capacité de couple (M_{K2}) du deuxième embrayage (21) correspond au produit de la valeur finale de couple et d'une fonction d'augmentation (F_{Auf}) qui commence à la valeur 0 et qui finit à la valeur 1.

9. Procédé selon l'une quelconque des revendications 4 à 8, **caractérisé en ce que** la capacité de couple (M_{K1}) du premier embrayage (11) correspond au produit de la valeur de départ du couple et d'une fonction de réduction (F_{Ab}) qui commence à la valeur 1 et qui finit à la valeur 0.

10. Procédé selon la revendication 8 ou 9, **caractérisé en ce que** la fonction d'augmentation (F_{Auf}) et/ou la fonction de réduction (F_{Ab}) dépendent linéairement du régime moteur (n_{M}) ou du temps (t).

11. Procédé selon l'une quelconque des revendications 1 à 10, **caractérisé en ce que** lors de l'adaptation du régime moteur (n_{M}), il se produit une intervention du moteur pour compenser l'influence des couples d'inertie.

12. Procédé selon l'une quelconque des revendications 1 à 3, 5, 7 à 11, **caractérisé en ce qu'**au début de l'opération de commutation, le régime moteur (n_{M}) correspond au régime (n_{E1}) de l'arbre d'entrée (12) de la première transmission partielle (10) et la capacité de couple (M_{K2}) du deuxième embrayage (21) est conduite lorsque le régime moteur (n_{M}) n'est pas adapté, jusqu'à une valeur intermédiaire (M_{ZW}) à partir de laquelle la capacité de couple (M_{K2}) du deuxième embrayage (21) est conduite à la valeur finale du couple de la courbe caractéristique de démarrage (24) et le régime moteur (n_{M}) est conduit au régime (n_{E2}) de l'arbre d'entrée (22) de la deuxième transmission partielle (20).
